# EUROPEAN PATENT APPLICATION

(11) **EP 2 309 059 A1**
(43) Date of publication of application: **13.04.2011**
(21) Application number: 09172128.2
(22) Date of filing: 02.10.2009
(51) Int. Cl.: D21H 17/14, D21H 17/15, D21H 17/18, D21H 17/24, D21H 17/25, D21H 17/28, D21H 17/37, D21H 17/43, D21H 19/12, D21H 21/18, D21H 23/24, D21H 23/28, D21H 23/50, C08B 15/10, C08L 1/02, C09D 101/10

(54) **Method of improving properties of cellulose-based fibrous sheet-formed materials**

(71) Applicant: Organoclick Aktiebolag, 106 91 Stockholm (SE)
(72) Inventor: Samec, Joseph, 163 67, SPÅNGA (SE); Enquist, Karl, 183 31, TÄBY (SE); Cordova, Armando, 116 42, STOCKHOLM (SE)
(74) Representative: Kitzler, Michael

(57) **Abstract**

A method of improving surface strength, fibre tear or linting of a sheet-formed fibrous material formed from an aqueous slurry of cellulose fibre comprises spraying a face of the material with a chemical formulation comprising or consisting of a polymer containing at least two carboxylic groups per molecule and low molecular weight organic mono-, di- or poly-carboxylic acid in an aqueous carrier, keeping the coated face at a temperature of 50 °C or more for a time sufficient to obtain the desired improvement including drying of the material. The chemical formulation is sprayed on the wet laid sheet-formed material at the wet end of a paper machine in an amount of from 0.1 % to 5 % by weight of the sheet-formed material in a dry state. Also disclosed is a sheet-formed fibrous material obtainable or obtained by the method and a laminated product comprising the sheet-formed fibrous material and a polymer foil.

## Description

### FIELD OF THE INVENTION

The present invention relates to a method of improving properties of cellulose-based fibrous sheet-formed materials, and to correspondingly improved materials. More specifically, the present invention relates to a method of improving the surface strength of a cellulose-based paper material, in particular one in which fibre tear and/or linting is reduced, and to correspondingly improved paper materials.

### BACKGROUND OF THE INVENTION

In certain applications the paper surface requires specific characteristics with little or no linting. An example is a cellulose-based material intended for the lid component in the package of sterile articles. When the lid is opened, that is when the seal is broken, any linting will contaminate the environment by released fibre or dust particles. This is unacceptable during surgery. In printing, linting causes dust build-up on rollers and letterpresses requiring costly machine stops for washing them to maintain a high standard of printing quality. Linting is presently considered to be the most serious newsprint related problem. (Ducey M. The International Journal of Newspaper Technology, 2006).

Inherent inter-fibre bonds in a formed paper sheet material are insufficient with regards to linting. Furthermore, the cellulose fibres alone are insufficient in both securing a strong seal between the lid component and the other material (usually a polymer foil) and also in giving an acceptable fibre tear. Fibre tear is sometimes referred to as linting. Therefore different methodologies have been developed in order to reduce fibre tear. Usually a "binder" is added to the paper web that will facilitate the inter-fibre bonding on the surface of the paper (see, for example, Canadian Patent No. 835,340).

Starch added to the pulp as cationic starch or by coating on the dry end of a paper machine is the most common means for enhancing the formation of additional inter-fibre bonds in order to reduce linting and fibre tear (Glittenberg, D. et al Paper Technology, 39 (1998) 37). As a wet-end additive alone, the effect of starch on surface strength is however not sufficient for many applications. Applied at the dry end, the effect on surface strength can however be sufficient by applying various formulations and polymers. Coating lines and size presses, to apply starch at the dry end of the paper machine, are however large and costly and requires big capital investments. Furthermore, a lot of coating material must be deposited, which is also economically unattractive. Coating and sizing also limits the speed of which a paper machine can run at. Additionally, coating and sizing often leads to a non-permeable surface that is undesired when the material is subjected to sterilization techniques.

Also paper based webs have been saturated with "binders" such as latex and is used in packaging materials of surgical instruments and medical devices (See U.S. Patent No. 5,895,557). In some cases an additional synthetic staple fibre has been added to the wood pulp furnish for forming a composite web (See U.S. Patent No 6,349,826). In these cases high loadings of latex is required. Introduction of synthetic fibres generally enhances the fibre tear resistance. However, the synthetic fibres also reduce delamination resistance and tensile strength. The latter can be compensated for by high add-ons of latex. The latex-"binder" is based on polyacrylates, styrene-butadiene copolymers, or ethylene-vinyl acetate that is added prior to or during the formation of the web. The packaging substrate has a high permeability towards sterilization but no data regarding fibre tear or linting has been presented.

Products BP 388 and BP 321 from Kimberly Clark Corporation, USA consist of various amounts of cellulose based fibres and synthetic latex. Although these products function well as medical packaging substrates, their permeability, tear, and lamination resistance could be improved.

U.S. Patent No. 5,204,165 discloses a laminate of at least one layer of thermoplastic fibre, bonded to a layer of wet-laid cellulose based fabric, and an acrylic binder. The binder can be added by using several methods including; foam, gravure roll, spraying, and nip-pressure binder pick-up. A disadvantage with these methodologies is that the permeability of the packaging substrate is reduced.

U.S. Patent No. 5,595,828 discloses a process for saturating a formed web of cellulosic fibres with a latex binder. U.S. Patent No. 3,552,558 discloses a package for clinical thermometers based on a packaging substrate made from paper having a sealable coating composed of ethylene vinyl acetate on the interior surface. A disadvantage with these methodologies is the low permeability. To compensate for the loss of permeability it is required to prolong the time of sterilization which is inefficient in an industrial application.

U.S. Patent No. 4,367,816 discloses a gas sterilizable package comprising a perforated plastic film that is sealed to the paper with ethylene-vinyl-acetate. While this methodology overcomes the problems of permeability, this method adds an extra step and an additional cost when applying the film.

US 2006/0068674 A1 discloses a medical package comprising a nonwoven fabric and a paper layer laminated thereto. The sterilizable laminate may comprise carboxymethyl cellulose.

Alternative materials to paper have also been developed. Most famous being DuPonts Tyvek® made from flash-spun polyolefin and is manufactured in both a more expensive coated and a less expensive non-coated version (cf U.S. Pat. No. 5,830,057). Tyvek® fabric exhibits high strength and high pore distribution important in the sterilization process. Disadvantages with the material compared to cellulose based materials are: lack of suppleness, softness, drapability, and ease of printing. Additionally, the material does not withstand high temperature in autoclaves used in steam sterilization (cf U.S. Patents Nos. 5,459,978 and 6,349,826).

### OBJECTS OF THE INVENTION

It is an object of the invention to provide a low-cost, one step method of improving a mechanical surface property of a sheet-formed fibrous material comprising or substantially consisting of cellulose fibre.

A further object of the invention is to provide a method of the aforementioned kind, which can be implemented in the paper industry without substantial change to apparatus employed.

Another object of the invention is to provide a method of the aforementioned kind that is advantageous from an environmental and health standpoint, and which results in a correspondingly advantageous product.

Additional objects of the invention will become evident from a study of the summary of the invention, a number of preferred embodiments illustrated in a drawing, and the appended claims.

### SUMMARY OF THE INVENTION

According to the present invention is disclosed a method of improving a surface property of a sheet-formed fibrous material comprising or substantially consisting of cellulose fibre, wherein a surface property-improving amount of an aqueous chemical formulation is added onto at least one surface of the material.

In particular, according to the present invention is disclosed a method of improving any of surface strength, fibre tear and/or linting of a sheet-formed fibrous material formed from an aqueous slurry of cellulose fibre, comprising spraying a face of the material with a chemical formulation comprising or consisting of a polymer containing at least two carboxylic groups per molecule and low molecular weight organic mono-, di- or poly-carboxylic acid in an aqueous carrier, keeping the coated face at a temperature of 50 °C or more, in particular of 70 °C or more, for a time sufficient to obtain the desired improvement including drying of the material, wherein the chemical formulation is sprayed on the wet-laid sheet-formed material at the wet end of a paper machine and wherein the dry weight of chemical formulation sprayed on the sheet-formed material is from 0.1 % to 5.0 %, more preferred from 0.5 to 3.0 % by weigh, even more preferred from 0.5 % to 1.0 % by weight of the sheet-formed material in a dry state. The sheet formed fibrous material of the invention is one that can be formed in a paper machine, including a paper machine dedicated to the production of speciality paper and paper board. In particular, the sheet formed fibrous material of the invention is one that can be rolled up in the machine in a dry state.

According a preferred aspect of the invention the time sufficient for obtaining the improvement is the drying time of the sheet formed fibrous material in the paper machine. It is preferred for the temperature to be kept at from 70 °C to 100 °C or more for a time sufficient to obtain the desired improvement. It is however also possible to use very short drying times at a high temperature. In the temperature range from 60 °C to 120 °C the curing time, that is, the time required to obtain the desired effect, can be accomplished in by heating for about 40 min at the lower end to about 1 min at the higher end. Still higher curing or drying temperatures require correspondingly shorter heating times, such as, for instance from 1 min or less at 200 °C. Alternatively, curing can be accomplished by heating the wet surface of the fibrous material for a very short time at a very high temperature, such as for a fraction of a second at a temperature of about 900 °C by irradiating the fibrous material with an infrared source. A person skilled in the art will understand that temperature and time is influenced by the nature of the polymeric polycarboxylic acid, the carboxylic acid, their weight proportions in the carrier, and the physical and chemical nature of the fibrous material. Adequate reaction conditions for a particular combination of polymeric polycarboxylic acid and carboxylic acid can be determined by such a person by carrying out a few simple experiments based on the present disclosure of the invention.

An important aspect of the method of the invention is that curing is accomplished by the normal drying temperatures and times of the paper machine, for example using a Yankee dryer. The process of the invention does not require non-standard changes in procedures and parameters of the industrial-scale paper machine with which the process is carried out.

According to another preferred aspect of the invention the polymer is or comprises a carboxylated polysaccharide or a mixture of carboxylated polysaccharides. The mean molecular weight (Mₙ) of the polymer is preferably 10 kD or more, preferrably 20 kD or more. It is preferred for the carboxylated polysaccharide to be selected from the group consisting of: carboxymethyl cellulose (CMC); carboxymethyl starch; polyuronic acid such as galacturonic acid, for instance as comprised by pectin; polyuronic acid such as mannuronic acid and guluronic acid, for instance as comprised by alginic acid; oxidatively degraded polyuronic acid; sodium carboxymethyl starch; oxidized starch; carboxmethyl hemicellulose as such and in admixture with carboxymethyl cellulose; carboxymethyl lignocellulose; their mixtures; including stoïchometric and non-stoïchiometric sodium and potassium salts thereof.

The polymeric polycarboxylic acid of the invention is one capable of forming a sol or a gel in the aqueous carrier. An oxidatively degraded polyuronic acid useful in the method of the invention is, for instance, one disclosed in U.S. Patent No. 6,903,209. Sodium carboxymethyl starch (CMS) useful in the method of the invention is, for instance, one disclosed in U.S. Patent No. 4,716,186. Oxidized starch useful in the method of the invention is, for instance, one disclosed in U.S. Patents Nos. 5,959,101 and 6,518,419. Other polymeric polycarboxylic acids useful in the method of the invention include carboxmethyl hemicellulose as such and in admixture with carboxymethyl cellulose, such as disclosed in US 2005/0061204 A1, and carboxymethyl lignocellulose, such as disclosed in U.S. Patent No. 7,384,892. The polymeric polycarboxylic acid of the invention comprises its stoïchometric and non-stoïchiometric sodium and potassium salts. Two or more polymeric polycarboxylic acids of the invention can be used in admixture.

According to another preferred aspect of the invention, the polymer is polyacrylic acid and/or a sodium or potassium salt thereof.

The low molecular weight carboxylic acid of the invention has a preferred molecular weight below 500 D, in particular below 200 D. In particular, the low molecular weight carboxylic acid is an aliphatic carboxylic acid, preferably an aliphatic di- or three-basic carboxylic acid. According to a further preferred aspect of the invention the low molecular weight carboxylic acid is one suitable for human consumption, such as acetic acid, mandelic acid, citric acid, tartaric acid, aspartic acid and glutamic acid, in particular citric acid and tartaric acid. For applications in which the product of the process of the invention is not intended for use in an environment in which linting may constitute a problem to humans, the low molecular weight carboxylic acid of the invention can also be one not suited for human consumption, such as formic acid, propionic acid, butanoic acid, pentanoic acid, oxalic acid, maleic acid, succinic acid, and glutaric acid.

A preferred aqueous carrier of the chemical composition of the invention is water, optionally comprising small amounts of inorganic salts such as sodium chloride, anti-oxidant such as ascorbic acid, metal ion scavenging agent such as EDTA, neutral or acidic surfactant, and the like. Also mechanical grade water, as used in paper machines, can be used. In the chemical formulation of the invention the weight ratio of low molecular carboxylic acid to polymeric polycarboxylic acid is from 0.1 parts to 30 parts of acid per 100 parts of polymeric polycarboxylic acid, more preferred from 15 parts to 30 parts of acid per 100 parts of polymeric polycarboxylic acid. The combined concentration of polymeric polycarboxylic acid and organic acid in the aqueous carrier can vary from 0.1 % by weight to 30 % by weight.

Preferred sheet-formed fibrous materials of the invention include, in particular, paper based materials such as printing paper, newsprint, machine glazed paper, gypsum grade paper, kraft paper, paperboard, liquid packaging board, corrugated board, fine paper, and specialty paper.

A preferred cellulose fibre for forming the sheet-formed fibrous material of the invention is a pulp fibre of any kind, in particular wood pulp such as unbleached wood pulp, bleached wood pulp, recycled wood pulp, but also cotton pulp, straw pulp, hemp pulp, viscose, and their mixtures. The cellulose fibre of the invention can comprise hemicellulose and/or lignin, including hemicellulose and lignin modified by the respective pulping process and/or the respective bleaching process and/or otherwise chemically modified. The sheet-formed fibrous material of the invention is a material comprising one or two free surfaces to which the chemical formulation of the invention can be applied. Application to one surface is preferred.

A preferred weight ratio of low molecular carboxylic acid to polymer containing at least two carboxylic groups per molecule is from 0.1 parts to 30 parts per 100 parts, in particular from 15 parts to 30 parts per 100 parts. A preferred viscosity of the chemical formulation of the invention is from 40 cP to 5000 cP.

According to the present invention is also disclosed a sheet-formed fibrous material obtainable or obtained by the method of the invention, a laminated product comprising sheet-formed fibrous material of the invention laminated to a polymer foil, the foil being preferably one selected from polyethylene foil, polypropylene foil, polyacetate foil, polyacrylate foil, polyurethane foil. According to a still further preferred aspect of the invention the laminated product is of medical grade.

The method of the invention has a wide applicability, which is illustrated but not limited to the manufacture of the following products comprising a sheet-formed fibrous material of the invention: newsprint, printing paper, machine glazed paper, gypsum grade paper, kraft paper, paper board, corrugated board, fine paper, and speciality paper.

The present invention will now be described by reference to a number of preferred embodiments illustrated in the following Examples

### DESCRIPTION OF THE FIGURES

- Fig. 1: is a diagram illustrating the effect CMC, CMC, and CA on fibre tear;
- Fig. 2: is a diagram illustrating the effect of a number of applied amounts of formulation 3 and formulation 5 on fibre tear;
- Fig. 3: is a diagram illustrating the effect of applied amounts of CMC and CMS formulations on fibre tear:
- Fig. 4: is a diagram illustrating the effect of a formulation of the invention comprising CMC and citric acid on surface strength of laboratory paper sheets.

### DESCRIPTION OF PREFERRED EMBODIMENTS

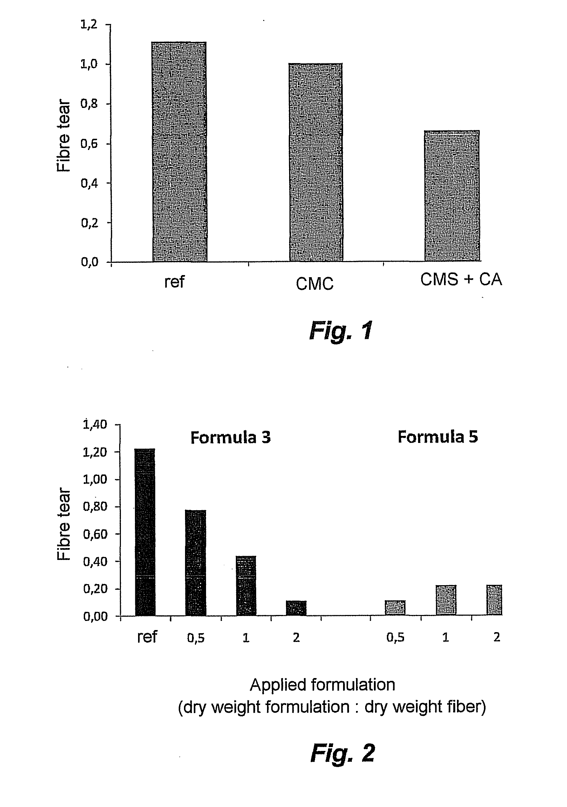

EXAMPLE 1. *Effect of a formulation of the invention comprising carboxymethyl cellulose and citric acid on fibre tear.* Laboratory paper sheets, 60 g/m², formed in a Rapid Köthen sheet former from bleached softwood and hardwood (70:30) fibres of chemical pulp were used. Additionally, standard process chemicals, such as AKD, alum, rosin, starch, etc were included in the pulp. Aqueous chemical formulations of citric acid (CA) and carboxymethyl cellulose (CMC) (CP Kelco (viscosity <200cP, DS 0.65-1.0, purity 99.5 %) were applied on the sheets by spraying. In the case of 20% CA, an aqueous solution of CMC and citric acid was prepared by dissolving 30 g of CMC and 6 g of citric acid in 1 L water. The sheets were heated in an oven to a temperature of 94 °C for 10 min at 1 bar. After conditioning over night the paper was laminated to a plastic film and analyzed for fibre tear. The results are shown in Figure 1.

For each experiment, three different seals were teared. Y-axis scale refers to: *1.33, groups of multiple fibres are visible on the plastic film;* 1.00, *a few single fibres are visible on the plastic film;* 0.66, *linting has occurred, but no single fibres are visible on the film;* 0.33, *single dust particles are visible on the film;* 0.00, *no dust particles are visible on the film.* For the reference a median value of 1.11 was obtained from three runs (1.00; 1.00; 1.33).

EXAMPLE 2. *Effect on fibre tear of varying amounts of a formulation of the invention containing carboxymethyl cellulose and two different concentrations of citric acid.* Laboratory paper sheets, 60 g/m² were used, formed in a Rapid Köthen sheet former from bleached softwood and hardwood (70:30) fibres of chemical pulp. Additionally, standard process chemicals like AKD, alum, rosin, starch, etc were included in the pulp. Aqueous chemical formulations of citric acid and CMC (CP Kelco (viscosity <200cP, DS 0.65-1.0, purity 99.5 %) were applied on the sheets by spraying. The amount of citric acid was 0.3 or 0.6 per cent by weight, while the amount of CMC was 3 per cent by weight. Formulation 3 was prepared by dissolving 30 g of CMC and 3 g of citric acid in 1 L water. Formulation 5 was prepared by dissolving 30 g of CMC and 6 g of citric acid in 1 L water. The amount of applied formulation was determined gravimetrically. The sheets were heated in an oven to a temperature of 94 °C for 10 min at 1 bar. After conditioning over night the paper was laminated to a plastic film and analyzed for fibre tear. The results are shown in Figure 2.

For each experiment, three different seals were teared. Y-axis scale refers to: *1.33, groups of multiple fibres are visible on the plastic film;* 1.00, *a few single fibres are visible on the plastic film;* 0.66, *linting has occurred, but no single fibres are visible on the film;* 0.33, *single dust particles are visible on the film;* 0.00, *no dust particles are visible on the film.* For the reference run 1.22 was observed, which corresponds to the three individual runs: 1.00; 1.33; 1.33.

For the reference was obtained a median value of 1.11 from three runs (1.00; 1.00; 1.33).

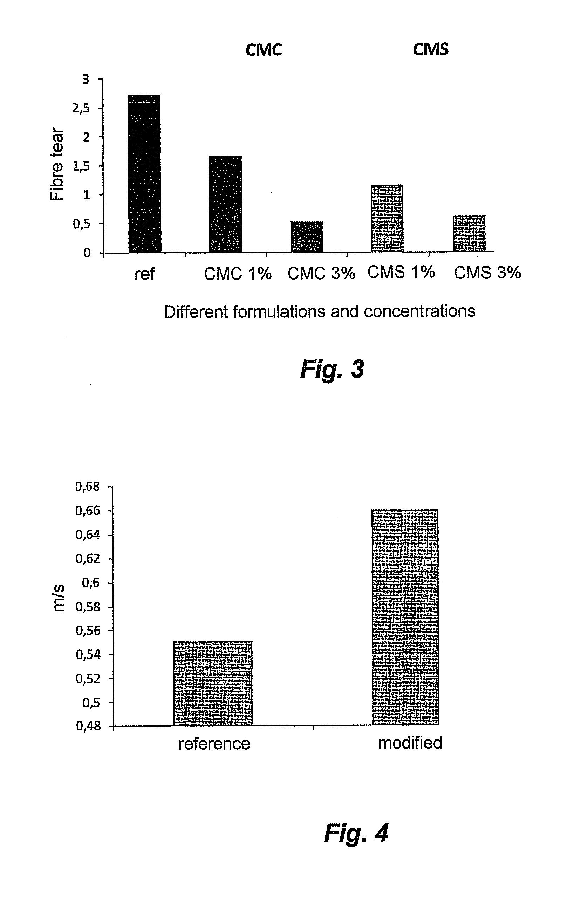

EXAMPLE 3. *Effect on fibre tear of various concentrations of a formulation of the invention comprising citric acid and either carboxymethyl cellulose or carboxymethyl starch.* Laboratory paper sheets, 60 g/m², formed in a Dynamic sheet former from bleached softwood and hardwood (70:30) fibres of chemical pulp were used. Aqueous chemical formulations of citric acid and CMC (Dow Wolf (viscosity <200cP, DS 0.65-1.0, purity 99.5 %) or CMS (CMS; Emsland Stärke, viscosity 200 cP, D.S. 0.3, purity 70-80 %) were applied on the sheets by spraying. The 1% concentration formulation was prepared by dissolving 30 g of CMC or CMS and 3 g of citric acid in 1 L water. The 3% concentration formulation was prepared by dissolving 10 g of CMC or CMS and 1 g of citric acid in 1 L water. The amount of applied formulation was determined gravimetrically and regulated so that the applied amount of formulation (dry weight) always was 2% of the dry weight of the fibre. The sheets were heated in an oven to a temperature of 100 °C for 6 min. After conditioning over night the sheets were laminated to a plastic film and analyzed for fibre tear. The results are shown in Figure 3.

For each experiment, three different seals were teared. The Y-axis scale refers to: 4.00, a *paper layer comes off;* 3.00, *portions of a paper layer come off;* 2.00, *spots of fibres are visible on the film;* 1.33, *multiple isolated fibres are visible on the plastic film;* 1.00, *single fibres are visible on the plastic film;* 0.66, *linting has occurred, but no single fibres are visible on the film;* 0.33, *isolated dust particles are visible on the film;* 0.00, *no dust is visible on the film.*

EXAMPLE 4. *Effect on surface strength of a formulation of the invention containing carboxymethyl cellulose and citric acid.* Laboratory paper sheets, 300 g/m², formed in a Rapid Köthen sheet former from bleached softwood and hardwood (70:30). Fibres of chemical pulp were used. Additionally, standard process chemicals such as AKD, alum, rosin, starch, etc were included in the pulp. Aqueous chemical formulations of citric acid and CMC (CP Kelco

(viscosity <200cP, DS 0.65-1.0, purity 99.5 %) were applied on the sheets by spraying. The formulation was prepared by dissolving 30 g of CMC and 6 g of citric acid in 1 L water. The amount of applied formulation was determined gravimetrically. The sheets were heated in an oven to a temperature of 94 °C for 20 min at 1 bar. After conditioning over night the surface strength were analyzed according to Tappi T 459 (Dennison) and Tappi T 476 (Taber). The results are shown in Table 1.

**Table 1. Effect of amount of applied formulation on Dennison and Taber**

| Entry | Formulation (dry weight)/ gram fibre (dry weight) | Dennison | Taber (mg/1000) |
|---|---|---|---|
| 1 | - (reference) | 11 | 430 |
| 2 | 0.5 | 16 | 280 |
| 3 | 2.0 | 16 | 210 |

EXAMPLE 5. *Effect on surface strength of a formulation of the invention containing carboxymethyl cellulose and citric acid.* Laboratory paper sheets, 60 g/m², formed in a Rapid Köthen sheet former from bleached softwood and hardwood (70:30) fibres of chemical pulp were used. Additionally, standard process chemicals such as AKD, alum, rosin, starch, etc were included in the pulp. An aqueous chemical formulation of citric acid and CMC (CP Kelco (viscosity <200cP, DS 0.65-1.0, purity 99.5 %) were applied on the sheets by spraying. The amount of citric acid was 0.6 per cent by weight. The amount of CMC was 3 % by weight. The formulation was prepared by dissolving 30 g of CMC and 6 g of citric acid in 1 L water. The amount of formulation applied on the sheet was determined gravimetrically (0.5% dry weight formulation/dry weight fibre). The sheets were heated in an oven for 10 min at 1 bar to a temperature of 94 °C. After conditioning over night the surface strength were tested according to the IGT surface strength protocol developed at Svenska Träforskningsinstitutet, STFI, Stockholm, Sweden). The results are shown in Figure 4.

## Claims

1. A method of improving any of surface strength, fibre tear and/or linting of a sheet-formed fibrous material formed from an aqueous slurry of cellulose fibre, comprising spraying a face of the material with a chemical formulation comprising or consisting of a polymer containing at least two carboxylic groups per molecule and low molecular weight organic mono-, di- or poly-carboxylic acid in an aqueous carrier, keeping the coated face at a temperature of 50 °C or more for a time sufficient to obtain the desired improvement including drying of the material, wherein the chemical formulation is sprayed on the wet laid sheet-formed material at the wet end of a paper machine and wherein the dry weight of chemical formulation sprayed on the sheet-formed material is from 0.1 % to 5 % by weight of the sheet-formed material in a dry state.

2. The method of claim 1, wherein the dry weight of chemical formulation sprayed on the sheet formed material is from 0.5 to 3 % by weight of the sheet-formed material in a dry state.

3. The method of claim 1, wherein the dry weight of chemical formulation sprayed on the sheet formed material is from 0.5 % to 1 % by weight of the sheet-formed material in a dry state.

4. The method of any of claims 1 to 3, wherein the time sufficient for obtaining the improvement is the drying time.

5. The method of any of claims 1 to 4, wherein the temperature is from 70 °C to 100 °C or more.

6. The method of any of claims 1 to 5, wherein the polymer is or comprises a carboxylated polysaccharide or a mixture of carboxylated polysaccharides.

7. The method of claim 6, wherein a carboxylated polysaccharide is selected from the group consisting of: carboxymethyl cellulose (CMC); carboxymethyl starch; polyuronic acid such as galacturonic acid, for instance as comprised by pectin; polyuronic acid such as mannuronic acid and guluronic acid, for instance as comprised by alginic acid; oxidatively degraded polyuronic acid; sodium carboxymethyl starch; oxidized starch; carboxmethyl hemicellulose as such and in admixture with carboxymethyl cellulose; carboxymethyl lignocellulose; their mixtures; including stoïchometric and non-stoïchiometric sodium and potassium salts thereof.

8. The method of any of claims 1 to 7, wherein the polymer is polyacrylic acid and/or a sodium or potassium salt thereof.

9. The method of any of claims 1 to 8, wherein a low molecular weight carboxylic acid has a molecular weight below 500, in particular below 200.

10. The method of any of claims 1 to 9, wherein a low molecular weight carboxylic acid is selected from aliphatic carboxylic acid, in particular low molecular weight aliphatic di- or three-basic carboxylic acid.

11. The method of claim 9 or 10, wherein a low molecular weight carboxylic acid is one suitable for human consumption, such as acetic acid, mandelic acid, citric acid, tartaric acid, aspartic acid and glutamic acid, in particular citric acid and tartaric acid.

12. The method of claim 9 or 10, wherein a low molecular weight carboxylic acid is one not suited for human consumption, such as formic acid, propionic acid, butanoic acid, pentanoic acid, oxalic acid, maleic acid, succinic acid, glutaric acid.

13. The method of any of claims 1 to 12, wherein the aqueous carrier of the invention is water, optionally comprising small amounts of inorganic salts such as sodium chloride, anti-oxidant such as ascorbic acid, metal ion scavenging agent such as EDTA, neutral or acidic surfactant, and the like.

14. The method of any of claims 1 to 13, wherein the sheet-formed fibrous material is a paper based material such as printing paper, newsprint, machine glazed paper, gypsum grade paper, kraft paper, paperboard, liquid packaging board, corrugated board, fine paper, and specialty paper.

15. The method of any of claims 1 to 14, wherein the cellulose fibre of the sheet-formed fibrous material is one of pulp of any kind, in particular wood pulp such as unbleached wood pulp, bleached wood pulp, recycled wood pulp, but also cotton pulp, straw pulp, hemp pulp, viscose, and their mixtures.

16. The method of any of claims 1 to 15, wherein the weight ratio of low molecular carboxylic acid to polymer containing at least two carboxylic groups per molecule in the chemical formulation is from 0.1 parts to 30 parts per 100 parts, in particular from 15 parts to 30 parts per 100 parts.

17. The method of any of claims 1 to 16, wherein the formulation has a viscosity of from 40 cP to 5000 cP.

18. Sheet-formed fibrous material obtainable or obtained by the method any of claims 1 to 17.

19. Laminated product comprising sheet-formed fibrous material of claim 18 laminated to a polymer foil.

20. The laminated product of claim 19, wherein the polymer foil is any of polyethylene foil, polypropylene foil, polyacetate foil, polyacrylate foil, polyurethane foil.

21. The laminated product of claim 19 or 20, of medical grade.

22. Newsprint comprising sheet-formed fibrous material of claim 18.

23. Printing paper comprising sheet-formed fibrous material of claim 18.

24. Machine glazed paper comprising sheet-formed fibrous material of claim 18.

25. Gypsum grade paper comprising sheet-formed fibrous material of claim 18.

26. Kraft paper comprising sheet-formed fibrous material of claim 18.

27. Paper board comprising sheet-formed fibrous material of claim 18.

28. Liquid packaging board comprising sheet-formed fibrous material of claim 18.

29. Corrugated board comprising sheet-formed fibrous material of claim 18.

30. Fine paper comprising sheet-formed fibrous material of claim 18.

31. Speciality paper comprising sheet-formed fibrous material of claim 18.
